# EUROPÄISCHE PATENTSCHRIFT

(11) **EP 0 472 757 B1**
(45) Veröffentlichungstag und Bekanntmachung des Hinweises auf die Patenterteilung: **29.05.1996**
(21) Anmeldenummer: 90116535.7
(22) Anmeldetag: 29.08.1990
(51) Int. Cl.: F16D 35/00

(54) **Viskokupplung**
Viscous coupling
Accouplement visqueux

(43) Veröffentlichungstag der Anmeldung: 04.03.1992
(73) Patentinhaber: GKN Viscodrive GmbH, D-53797 Lohmar (DE)
(72) Erfinder: Gasch, Christian, D-5204 Lohmar 1 (DE)
(74) Vertreter: Harwardt, Günther, Dipl.-Ing.

(56) Entgegenhaltungen:
- EP-A- 0 236 650
- US-A- 3 396 605
- US-A- 4 650 028
- PATENT ABSTRACTS OF JAPAN, vol. 13, no. 45 (M-792)[3393], 2. Februar 1989; & JP-A-63 251 636

## Beschreibung

Die Erfindung betrifft eine Viskokupplung mit einem Gehäuse, gegenüber welchem zwei getrennte Naben unabhängig voneinander drehbar gehalten sind, wobei Außenlamellen drehfest mit dem Gehäuse und Innenlamellen jeweils drehfest mit den Naben verbunden sind und die Außen- und Innenlamellen in einer bestimmten Folge abwechselnd angeordnet und die Außen- oder Innenlamellen beabstandet zueinander gehalten sind sowie der nicht von diesen besetzte Innenraum zumindest teilweise mit einer Viskoflüssigkeit, insbesondere Silikonöl, gefüllt ist.

Viskokupplungen sind in der Mehrzahl derart aufgebaut, daß die Naben auch bei ansteigendem Druck im Innengehäuse, was stets bei Erwärmung der Kupplung der Fall ist, keine Axialkräfte erfahren.

Aus der EP 0 167 312 B1 ist es bekannt, bei einer Viskokupplung mit zwei Naben (Torquesplitter) die flächenmäßigen Axialschnitte der Naben derart auszulegen, das keine durch den entstehenden Innendruck resultierenden Axialkräfte auf die Naben einwirken können.

Bei allen vorgenannten Lösungen ist von Nachteil, daß hieraus eine indifferente Lage der Naben im Gehäuse der Viskokupplung entsteht. Ein unregelmäßiger Druckaufbau oder auch nur geringfügige Einwirkungen von außen können dazu führen, daß die Naben gegenüber dem Gehäuse aufgrund des notwendigen Betriebsspieles in Achsrichtung eine Verstellung erfahren. Es tritt somit eine dauernde Axialbewegung mit wechselnden Richtungen der Naben und damit der Dichtungen ein. Da bei steigendem Innendruck auch die Anpreßkraft der Lippen der Axialdichtringe zunimmt, sind diese einem großen Verschleiß unterworfen. Der Verschleiß resultiert aus der Herstellungsart der Lagersitze bzw. der Dichtsitze auf denen die Dichtungen laufen. Diese werden hauptsächlich feingedreht oder geschliffen. Sie weisen dadurch, wenn auch kleinste, ringförmig verlaufende und axial benachbarte Riefen auf. Durch diese Riefen wird bei Axialbewegung der Naben und der Dichtlippen gegenüber den Sitzflächen ein wesentlich höherer Verschleiß bewirkt, als er sich aus einer reinen Rotationsbewegung ergibt.

Viskokupplungen der beanspruchten Gattung werden bei Kraftfahrzeugen zur Verteilung eines Drehmomentes und als gleichzeitiger Ersatz eines Differentiales zwischen den beiden Achsen oder zwischen den Rädern ein und derselben Achse eingesetzt. Von den Anschlüssen an der Viskokupplung, die beispielsweise aus Antriebswellen bestehen, und in dem Fall, daß die als Torquesplitter gestaltete Viskokupplung zwischen den Rädern einer Achse angeordnet ist, beispielsweise Gleichlaufgelenke umfassen können, ergeben sich Axialkräfte, die teilweise noch intermittierend auftreten, welche die Naben der Viskokupplung verschieben.

Der Erfindung liegt die Aufgabe zugrunde, eine Viskokupplung zu schaffen, bei der die im Kupplungsgehäuse gelagerten Naben stets in einer definierten Stellung im Gehäuse abgestützt sind.

Diese Aufgabe wird erfindungsgemäß dadurch gelöst, daß die rechtwinklig zur Drehachse der Viskokupplung verlaufenden und sich im Innenraum befindenden jeweiligen Projektionsflächen der beiden Kupplungsnaben größenmäßig unterschiedlich sind, wobei entweder die inneren oder die äußeren Projektionsflächen beider Kupplungsnaben gleichmäßig größer sind als die ihnen jeweils gegenüberliegenden Projektionsflächen.

Von Vorteil bei dieser Anordnung ist, daß die Naben stets in der gewünschten Richtung beaufschlagt sind, so daß sie entweder auseinander oder aufeinander zu von der Druckdifferenz beaufschlagt sind. Diese Druckbeaufschlagung und die daraus resultierende Anlagekraft erzeugen eine eindeutige Anlage der Naben und Zentrierung gegenüber dem Gehäuse, so daß indifferente Positionen und eine axiale Bewegung in den Dichtungen ausgeschlossen ist.

In der Praxis bedeutet dies, daß die Durchmesser, auf denen die Dichtungen anliegen, unterschiedlich bemessen sind. Dabei sind entsprechend der Lehre der Erfindung entweder die äußeren Dichtungen oder die inneren Dichtungen auf einem größeren Durchmesser angeordnet.

In weiterer Ausgestaltung ist für den Fall, daß die beiden inneren Projektionsflächen die größeren Projektionsflächen sind, vorgesehen, jeweils zwischen den diesen abgewandten Projektionsflächen und den diesen zugewandten Deckelinnenflächen des Gehäuses eine Anlaufscheibe anzuordnen. Die Anlaufscheibe dient zur Aufnahme der Axialkraft und ist aus einem eine verbesserte Gleiteigenschaft aufweisenden Werkstoff hergestellt.

Für den Fell, daß die beiden äußeren Projektionsflächen der beiden Kupplungsnaben die größeren Projektionsflächen sind, ist die Anlaufscheibe zwischen den beiden inneren Projektionsflächen angeordnet.

Je nach Anwendungsfall kann festgestellt werden, ob durch die an die Naben angeschlossenen Bauteile auf diese im ziehenden oder drückenden Sinne eingewirkt wird. Dabei kann auch die Größe der Einwirkungskraft festgestellt werden. Entsprechend der bestimmten Größen wird auch der Größenunterschied der Projektionsflächen festgelegt. Dabei erfolgt eine Festlegung im kalten Zustand, um zu gewährleisten, daß bei allen Betriebszuständen die gewünschte Anlage gegeben ist.

Ein bevorzugtes Ausführungsbeispiel der Erfindung ist in der Zeichnung schematisch dargestellt.

Es zeigt
- Figur 1: einen Längsschnitt durch eine Viskokupplung, bei der die Projektionsflächen der Naben größer ausgebildet sind als die der äußeren Projektionsflächen,
- Figur 2: eine Viskokupplung, bei der die äußeren Projektionsflächen der Naben größer als die deren inneren Projektionsflächen ausgebildet sind und
- Figur 3: ein Antriebsschema für ein vierradgetriebenes Kraftfahrzeug, bei dem die erfindungsgemäßen Viskokupplungen Einsatz finden.

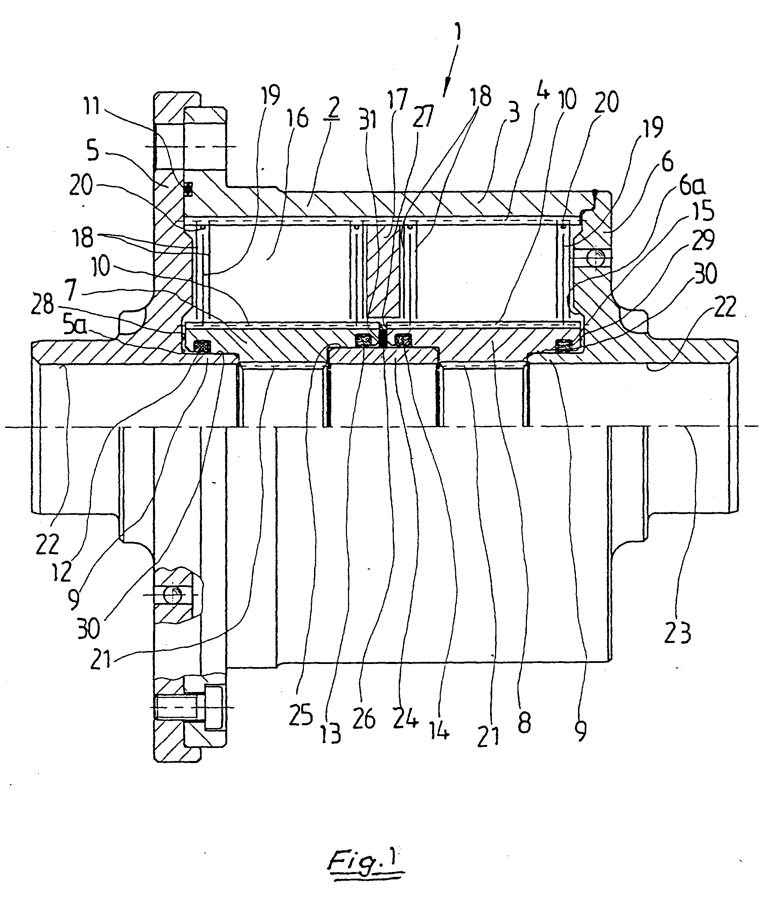

Bei der in Figur 1 dargestellten Viskokupplung 1 besteht das Gehäuse 2 aus dem zylindrischen Gehäusemantel 3, der einseitig mit einem Flanschansatz versehen ist und aus an seinen Enden angebrachten Deckeln 5, 6. Der Deckel 6 ist mit dem Gehäusemantel 3 verschweißt. Der Deckel 5 ist mit dem Gehäusemantel 3 über eine Schraubverbindung mit dem Flanschansatz des Gehäusemantels 3 verbunden. Zwischen beiden ist eine Dichtung 11 eingelegt. Das Gehäuse 2 weist in seinem Gehäusemantel 3 sich parallel zur Drehachse 23 erstreckende und an seiner Innenfläche umfangsverteilte Verzahnungen 4 auf. Im Gehäuse 2 sind an den Deckeln 5, 6 Naben 7, 8 unabhängig voneinander drehbar gegenüber dem Gehäuse 2 gelagert. Die Naben 7, 8 sind jeweils auf Fortsätzen 9, die einanderzugerichtet verlaufen und von den Deckeln 5, 6 ausgehen, gelagert. Beide Naben 7, 8 weisen auf ihrer Außenfläche parallel zur Drehachse verlaufende und umfangsverteilte Verzahnungen 10 auf. Mit ihren von den Deckeln 5, 6 abgewandten Enden sind die beiden Naben 7, 8 innen auf einem Stützring 24 gelagert. Zwischen der Außenfläche 25 des Stützringes 24 sowie den Außenflächen 30 der Fortsätze 9 und den Naben 7, 8 sind Dichtungen 12, 13, 14, 15 angeordnet. Der Innenraum 16 der Viskokupplung 1, der zwischen der Außenfläche der beiden Naben 7, 8 und der Innenfläche des Gehäuses 2 gebildet ist, ist durch eine Zwischenscheibe 17 in zwei Teilräume unterteilt. Die Zwischenscheibe 17 ist in dem Bereich angeordnet, in welchem die beiden Naben 7, 8 aneinandergrenzen.

In den beiden Teilinnenräumen des Innenraumes 16 sind den verzahnten Bereichen 4 des Gehäuses 2 Außenlamellen 18 zugeordnet, die mit ihrem verzahnten Außenumfang in den Verzahnungen 4 des Gehäuses 2 aufgenommen sind. Die Außenlamellen 18 sind ringförmig gestaltet. Beim Ausführungsbeispiel ist zwischen je zwei in axialer Richtung aufeinander folgenden Außenlamellen 18 jeweils eine Innenlamelle 19 angebracht. Die Innenlamellen 19 sind den Naben 7 bzw. 8 zugeordnet und mit in ihren Bohrungen vorgesehenen Verzahnungen auf den Verzahnungen 10 der Naben 7, 8 drehfest aufgenommen. Die im Ausführungsbeispiel gezeigte Folge von Außenlamellen 18 und Innenlamellen 19 kann auch anders gewählt werden, indem nämlich beispielsweise jeweils zwischen zwei Außenlamellen 18 an Stelle von einer, zwei Innenlamellen 19 angeordnet sind. Die Außenlamellen 18 sind über Distanzringe 20 in ihrer axialen Bewegung in der Verzahnung 4 begrenzt. Die Innenlamellen 19 sind jeweils auf den Innenverzahnungen 10 der beiden Naben 7, 8 verschiebbar. Die Verschiebung der Innenlamellen 19 in den jeweiligen Verzahnungen 10 der beiden Naben 7, 8 ist durch die begrenzte Bewegbarkeit bzw. Distanzierung der Außenlamellen 18 ebenfalls begrenzt. Die Außenlamellen 18 und Innenlamellen 19 überlappen sich radial. Die beiden Naben 7, 8 sind jeweils mit einer Bohrung versehen, die eine Innenverzahnung 21 tragen. Die Deckel 5, 6 weisen Bohrungen 22 auf, durch welche Antriebswellen axial einsteckbar sind, welche mit Außenverzahnungen in die Innenverzahnungen 21 der Naben 7, 8 in Eingriff bringbar sind. Diese können beispielsweise Bestandteil der Anschlußteile eines Gelenkes oder einer Antriebswelle sein. Das Gehäuse 2 bzw. die Naben 7, 8 sind um die Drehachse 23 drehbar, wobei auch eine Relativverdrehung der Naben 7, 8 gegenüber dem Gehäuse 2 und einander gegenüber möglich ist. Die beiden Naben 7, 8 weisen einander zugewandt Stirnflächen auf, die innere Projektionsflächen 26, 27 darstellen. Die Größe der inneren Projektionsflächen 26 und 27 ergibt sich in einem Radialschnitt der Nabe 7 oder 8 mit einer Ringfläche, die einen kleinsten Durchmesser aufweist, der von der Sitzfläche für die beiden Dichtungen 13, 14 und damit durch den Durchmesser der Außenfläche 25 des Stützringes 24 bestimmt ist. Der äußere Durchmesser wird durch die Außenfläche der beiden Naben 7, 8 bestimmt. Ferner besitzen die beiden Naben 7, 8 entgegengerichtet zu den vorgenannten Projektionsflächen 26, 27 in einem Radialschnitt im Bereich der Deckel 5, 6 ebenfalls Projektionsflächen 28, 29, wobei die rechtwinklig zur Drehachse 23 verlaufende Projektionsfläche 28 der Deckelinnenfläche 5a des Deckels 5 zugewandt ist, während die Projektionsfläche 29 der Nabe 8 der Deckelinnenfläche 6a des Deckels 6 zugewandt ist. Es ist erkennbar, daß bei dem Ausführungsbeispiel nach Figur 1 der Durchmesser der Außenflächen 30 der Fortsätze 9 der beiden Deckel 5,6, auf dem die Dichtungen 12,15 laufen, kleiner ist, als der Durchmesser der Außenfläche 25 des Stützringes 14,auf dem die beiden inneren Dichtungen 13,14 laufen. Daraus folgt auch, daß die beiden inneren Projektionsflächen 26,27 eine kleinere Fläche einnehmen als die beiden äußeren Projektionsflächen 28,29. Hieraus folgt, daß bei gleichem Druck im Gehäuseinnenraum 16 aufgrund der größeren Flächenanteile der beiden äußeren Projektionsflächen 28,29 die beiden Naben 7,8 stets axial entlang der Drehachse 23 aufeinanderzu bewegt werden und sich an der zwischen ihren beiden inneren Projektionsflächen 26,27 befindlichen Anlaufscheibe 31 gegeneinander abstützen. Hieraus ist eine definierte Lage der beiden Naben 7,8 gegeben, welche verhindert, daß beispielsweise die Dichtungen 12 bis 15 axiale Verschiebungen auf den Außenflächen 25,30 von Stützring 24 und den Fortsätzen 9 ausführen, was zu einer Schädigung der Dichtungslippen wegen verstärkter Abnutzung und damit zur Undichtigkeit führen könnte.

Die Größenunterschiede zwischen den äußeren Projektionsflächen 28,29 und inneren Projektionsflächen 26,27 kann dadurch bestimmt werden, daß stets eine nach innen gerichtete Kraft in einer Größenordnung erzielt wird, die größer ist, als beispielsweise eine von außen eingeleitete Kraft in die beiden Naben 7,8 im ziehenden Sinne, d.h. in einem Sinne, bei dem die beiden Naben 7,8 in Richtung ihrer benachbarten Deckel 5,6 bewegt würden. Solche Kräfte können beispielsweise aus der besonderen Gestaltung oder Ausbildung der angeschlossenen Antriebswellen oder Antriebsgelenke resultieren. Wenn diese also ziehend auf die Naben 7,8 wirken würden, ist eine Anordnung, wie sie in Figur 1 dargestellt ist, sinnvoll.

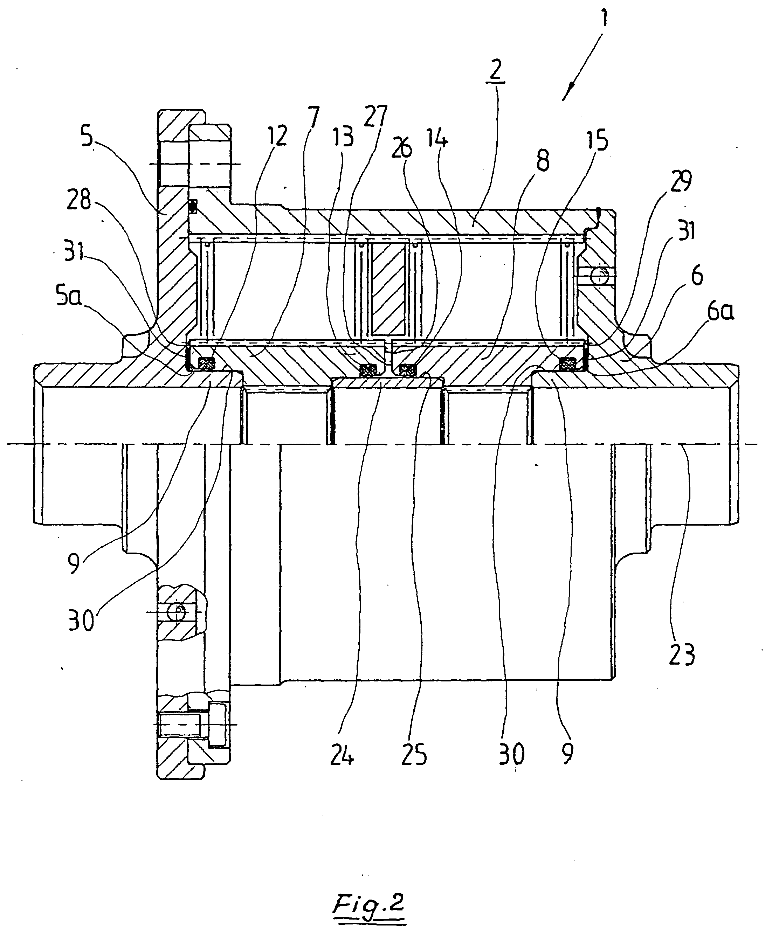

Die in Figur 2 dargestellte Viskokupplung entspricht vom Grundaufbau her dem der Figur 1. Der einzige Unterschied besteht darin, daß die inneren Projektionsflächen 26,27 der Naben 7,8 größer bemessen sind als deren äußere Projektionsflächen 28,29. Da die größere Kolbenfläche nunmehr von den inneren Projektionsflächen 26,27 der Naben 7,8 gebildet wird, werden diese unter anstehendem Druck nach außen in Richtung auf die Deckelinnenflächen 5a,6a bewegt. Aus diesem Grunde sind auch zwischen den Deckelinnenflächen 5a,6a und den diesen zugewandten Projektionsflächen 28,29 der beiden Naben 7,8 Anlaufscheiben 31 angeordnet. Entsprechend ist der Außendurchmesser 25 der Stützscheibe 24, auf dem die Dichtungen 13,14 abgestützt sind, kleiner als der Durchmesser der Außenfläche 30 der Fortsätze 9 der beiden Deckel 5,6. Eine solche Anordnung wird vorzugsweise dann gewählt, wenn beispielsweise von den an die Naben 7,8 anzuschließenden Teilen eine nach innen gerichtete Kraft im Sinne des Aufeinanderzubewegens der beiden Naben 7,8 ausgeübt wird.

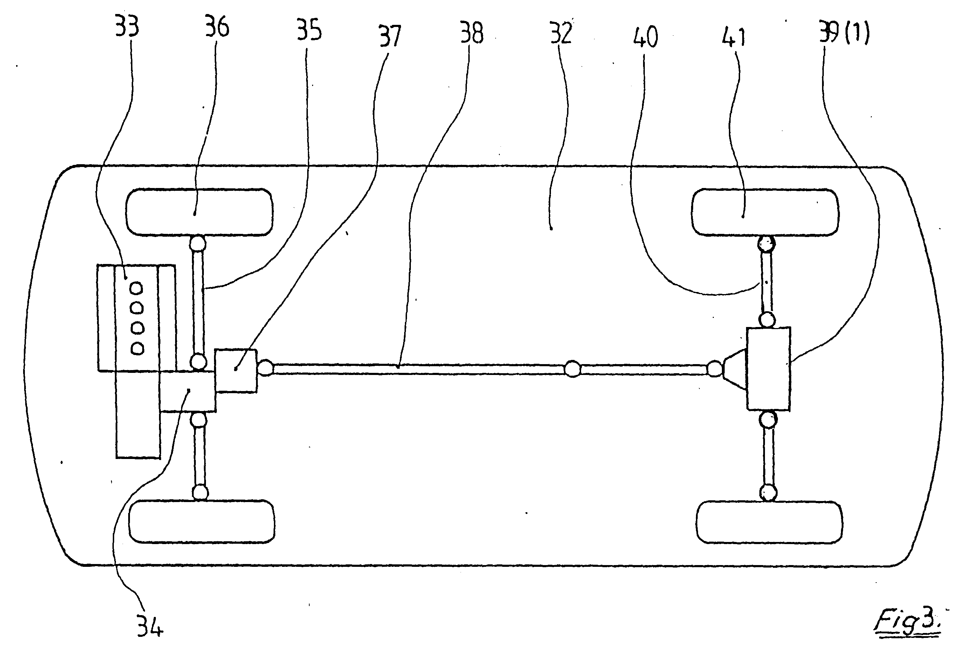

In Figur 3 ist ein Kraftfahrzeug 32 dargestellt, das als vierradgetriebenes Kraftfahrzeug gestaltet ist. Von der Motor- Getriebeeinheit ausgehend erfolgt ein Antrieb des Vorderachsdifferentials 34, von dem aus über Seitenwellen 35 die Vorderräder 36 angetrieben werden. Von der Drehbewegung des Vorderachsdifferentials 34 wird über ein Abzweiggetriebe 37 und über eine Längswelle 38 das Hinterachsdifferential 39 angetrieben, welches als Viskokupplung 1 entsprechend der Ausgestaltung der Figuren 1 oder 2 ausgebildet ist. Die beiden Naben 7,8 entsprechen denen der Figuren 1 und 2 und sind über hintere Seitenwellen 40 mit je einem der beiden Hinterräder 41 drehfest verbunden. Von der Längswelle 38 wird das Gehäuse 2 der Viskokupplung 1 angetrieben. Hierzu ist beispielsweise an dem Deckel 5 zusätzlich ein Tellerrad befestigt, das von einem Kegelrad, das von der Längswelle 38 angetrieben wird, seine Drehbewegung erfährt. Die Viskokupplung 1 nach den Figuren 1 und 2 wirkt als Torque-Splitter. Das über die Längswelle 38 eingeleitete Drehmoment wird auf die beiden Hinterräder 41 verteilt. Gleichzeitig erlaubt die Anordnung von zwei Naben 7,8 eine Relativbewegung der beiden Hinterräder 41 gegeneinander, so daß also auch die Funktion eines normalen offenen Differentials übernommen wird, wenn keine größeren Drehzahldifferenzen anstehen. Bei größeren Drehzahldifferenzen erfolgt aufgrund der Scherung der Viskoflüssigkeit durch die Außen- und Innenlamellen 18,19 der Aufbau eines Reaktionsmomentes und die Weiterleitung des Drehmomentes an das wesentlich langsamer laufende oder stillstehende Hinterrad 41. Von den Seitenwellen 40 oder sonstigen angeschlossenen getriebenen Bauteilen der Hinterachse können Kräfte generiert werden, die über die Seitenwellen 40 in die Naben 7, 8 eingeleitet werden und eine Axialbewegung der Naben 7, 8 gegenüber ihren Sitzflächen erzeugen könnten. Die auftretenden Kräfte können gemessen werden und die Flächendifferenz der Projektionsflächen 26 bis 29 kann so gestaltet sein, daß entsprechende Gegenkräfte nach Richtung und Größe aufgebaut werden, um ausschließlich eine Rotation der Naben 7,8 und damit der Dichtungen 12-15 den Sitzflächen 25,30 gegenüber zu gewährleisten.

### Bezugszeichenliste

- 1: Viskokupplung
- 2: Gehäuse
- 3: Gehäusemantel
- 4: Verzahnung
- 5,6: Deckel
- 5a,6a: Deckelinnenflächen
- 7,8: Nabe
- 9: Fortsatz
- 10: Verzahnung der Nabe
- 11: Deckeldichtung
- 12,13,14,15: Dichtung
- 16: Innenraum
- 17: Zwischenscheibe
- 18: Außenlamelle
- 19: Innenlamelle
- 20: Distanzring
- 21: Innenverzahnung der Nabe
- 22: Bohrung in Deckel
- 23: Drehachse
- 24: Stützring
- 25: Außenfläche des Stützrings
- 26,27: innere Projektionsflächen der Naben
- 28,29: äußere Projektionsflächen der Naben
- 30: Außenfläche des Fortsatzes
- 31: Anlaufscheibe
- 32: Fahrzeug
- 33: Motor/Getriebeeinheit
- 34: Vorderachsdifferential
- 35: Vordere Seitenwelle
- 36: Vorderräder
- 37: Abzweiggetriebe
- 38: Längswelle
- 39: Viskokupplung/Torque-Splitter
- 40: hintere Seitenwelle
- 41: Hinterräder

## Patentansprüche

1. Viskokupplung (1) mit einem Gehäuse (2), gegenüber welchem zwei getrennte Naben (7, 8) unabhängig voneinander drehbar gehalten sind, wobei Außenlamellen (18) drehfest mit dem Gehäuse (2) und Innenlamellen (19) jeweils drehfest mit den Naben verbunden sind und die Außen- und Innenlamellen (18, 19) in einer bestimmten Folge abwechselnd angeordnet und die Außen- oder Innenlamellen beabstandet zueinander gehalten sind sowie der nicht von diesen besetzte Innenraum (16) zumindest teilweise mit einer Viskoflüssigkeit, insbesondere Silikonöl, gefüllt ist,
dadurch gekennzeichnet,
daß die rechtwinklig zur Drehachse (23) der Viskokupplung (1) verlaufenden und sich im Innenraum (16) befindenden jeweiligen Projektionsflächen (26, 28; 27, 29) der beiden Kupplungsnaben (7, 8) größenmäßig unterschiedlich sind, wobei entweder die inneren (26, 27) oder die äußeren (28, 29) Projektionsflächen beider Kupplungsnaben (7, 8) gleichmäßig größer sind, als die ihnen jeweils gegenüberliegenden Projektionsflächen.

2. Viskokupplung nach Anspruch 1,
dadurch gekennzeichnet,
daß die beiden inneren Projektionsflächen (26, 27) die größeren Projektionsflächen sind und jeweils zwischen den diesen abgewandten Projektionsflächen (28, 29) und den letzteren zugewandten Deckelinnenflächen (5a, 6a), eine Anlaufscheibe (31) angeordnet ist.

3. Viskokupplung nach Anspruch 1,
dadurch gekennzeichnet,
daß die beiden äußeren Projektionsflächen (28, 29) der beiden Kupplungsnaben (7, 8) die größeren Projektionsflächen sind und zwischen den beiden inneren Projektionsflächen (26, 27) eine Anlaufscheibe (31) angeordnet ist.

## Claims

1. A viscous coupling (1) with a housing (2) opposite which two separate hubs (7, 8) are held so as to be rotatable independently of one another, with outer plates (18) being rotatably connected to the housing (2) and inner plates (19) being non-rotatably connected to the hubs and with the outer and inner plates (18, 19) being arranged so as to alternate in a certain sequence and with the outer or inner plates being held so as to be spaced from one another and with the part of the inner chamber (16) not occupied by said plates being at least partially filled with a viscous fluid, especially silicone oil,
characterised in
that the two coupling hubs (7, 8) comprise projection faces (26, 28; 27, 29) which extend at a right angle relative to the rotational axis (23) of the viscous coupling (1), which are positioned in the inner chamber (16) and which vary in size, with either the inner (26, 27) or outer (28, 29) projection faces of both coupling hubs (7, 8) being uniformly larger than the projection faces arranged opposite thereto.

2. A viscous coupling according to claim 1,
characterised in
that the two inner projection faces (26, 27) constitute the larger projection faces and that between the projection faces (28, 29) facing away therefrom and the inner cover faces (5a, 6a) facing the latter, there is arranged a stop disc (31).

3. A viscous coupling according to claim 1,
characterised in
that the two outer projection faces (28, 29) of the two coupling hubs (7, 8) constitute the larger projection faces and that between the two inner projection faces (26, 27) there is arranged a stop disc (31).

## Revendications

1. Accouplement visqueux (1) comportant un boîtier (2) par rapport auquel deux moyeux séparés (7, 8) sont retenus en rotation indépendamment l'un de l'autre, des lamelles extérieures (18) étant reliées solidairement en rotation au boîtier (2) et des lamelles intérieures (19) étant reliées chacune solidairement en rotation aux moyeux, et les lamelles extérieures et intérieures (18, 19) étant agencées en alternance en une certaine succession, et les lamelles extérieures ou intérieures étant retenues à distance les unes des autres, et la chambre intérieure (16) non occupée par celles-ci étant remplie du moins partiellement avec un liquide visqueux, en particulier de l'huile de silicone,
caractérisé en ce que les surfaces de projection respectives (26, 28 ; 27, 29) des deux moyeux d'accouplement (7, 8), qui s'étendent à angle droit par rapport à l'axe de rotation (23) de l'accouplement visqueux (1) et qui se trouvent dans la chambre intérieure (16) sont différentes quant à leur taille, soit les surfaces de projection intérieures (26, 27), soit les surfaces de projection extérieures (28, 29) des deux moyeux d'accouplement (7, 8) étant régulièrement plus grandes que les surfaces de projections respectivement en vis-à-vis de celles-ci.

2. Accouplement visqueux selon la revendication 1,
caractérisé en ce que les deux surfaces de projection intérieures (26, 27) sont les surfaces de projection plus grandes, et en ce qu'il est prévu un disque d'encaissement (31) respectivement entre les surfaces de projection (28, 29) détournées de celles-ci et les surfaces intérieures (5a, 6a) du couvercle orientées vers ces dernières.

3. Accouplement visqueux selon la revendication 1,
caractérisé en ce que les deux surfaces de projection extérieures (28, 29) des deux moyeux d'accouplement (7, 8) sont les surfaces de projection plus grandes; et en ce qu'il est prévu un disque d'encaissement (31) entre les deux surfaces de projection intérieures (26, 27).
